# EUROPÄISCHE PATENTSCHRIFT

(11) **EP 1 208 728 B1**
(45) Veröffentlichungstag und Bekanntmachung des Hinweises auf die Patenterteilung: **02.11.2005**
(21) Anmeldenummer: 01127091.5
(22) Anmeldetag: 15.11.2001
(51) Int. Cl.: A01B 1/06, A01B 45/00

(54) **Kombinationsgerät zur Garten-, Landschafts- oder Hofpflege**
Combined tool for garden, landscape or yard care
Outil combiné pour soigner le jardin, le paysage ou l'enclos

(30) Priorität: 23.11.2000 DE 10058345
(43) Veröffentlichungstag der Anmeldung: 29.05.2002
(73) Patentinhaber: AL-KO KOBER AG, D-89359 Kötz (DE)
(72) Erfinder: DeFilippo, Antonio, 71522 Backnang (DE)
(74) Vertreter: Binder, Armin

(56) Entgegenhaltungen:
- GB-A- 1 231 798
- US-A- 2 042 597
- US-A- 2 801 512
- US-A- 5 398 768

## Beschreibung

Die Erfindung betrifft ein Kombinationsgerät zur Garten-, Landschafts- oder Hofpflege mit den Merkmalen des Oberbegriffs des Anspruches 1.

Ein ähnliches Kombinationsgerät ist aus der DE 39 30 123 A1 bekannt. Hier ist ein Kombinationsgerät beschrieben, bei dem als Arbeitswerkzeuge eine Vertikutierwelle, eine Kehrwalze oder eine Lüfterwelle, zur Belüftung des Rasens, anbaubar sind. Zum Antrieb der einzelnen Arbeitswerkzeuge dient ein Antriebsmotor, dessen Riemenscheibe mittels eines Treibriemens, die dem anzutreibenden Arbeitswerkzeug zugeordnet ist, verbindbar ist. Beim Wechseln des Arbeitswerkzeuges ist zunächst eine Abdeckung, die den Riementrieb überdeckt, abzunehmen. Danach ist der Riemen von der dem Arbeitswerkzeug zugeordneten Riemenscheibe zu lösen. Das Gerät sieht eine Hauptbewegungsrichtung als Arbeitsrichtung vor. Da die Drehrichtung, beispielsweise einer Kehrwalze, bei einer solchen vorgegebenen Hauptbewegungsrichtung der einer Messerwelle zum Vertikutieren entgegengerichtet ist, ist der Kehrwalze zusätzlich ein Umkehrgetriebe zugeordnet. Der Wechsel zwischen unterschiedlichen Arbeitswerkzeugen in einem solchen Gerät ist sehr aufwendig und erfordert entsprechende Sachkenntnis und ist daher für den einfachen Gebrauch zu kompliziert.

Eine Weiterentwicklung dieses Kombinationsgerätes ist aus der DE 197 31 108 A1 bekannt. Es besitzt vier Räder zum Fahren und zwischen diesen Rädern eine Schwinge, zur Lagerung einer Messerwelle oder einer Kehreinrichtung, wobei die Messerwelle durch einen Motor antreibbar ist. Die Kehrwalze und die Messerwelle können wechselseitig in die Schwinge eingesetzt werden.

Nachteilig bei einer solchen Ausführung ist, dass es auch hier wieder notwendig ist, dass, schon allein zum Wechseln zwischen zwei Arbeitsfunktionen, wieder die Arbeitswelle ausgetauscht werden muß, wofür entsprechendes Werkzeug und die entsprechenden handwerklichen Fähigkeiten des Bedienpersonals notwendig sind.

Eine andere Weiterentwicklung ist in der oberbegriffbildenden Patentschrift DE 195 19 365 C1 dargestellt. Dort wird in den Figuren 1 und 2 ein Gartengerät offenbart, welches eine Kehrwalze und eine Vertikutierwalze aufweist, zwischen denen eine Fahrachse derart angeordnet ist, dass ein Verkippen des Gerätes um die Fahrachse mit einem Winkel von ca. 10° entweder die Kehrwalze oder die Vertikutierwalze in Arbeitsstellung bringt. Der an einer Seite angebrachte Führungsgriff erlaubt lediglich das Bedienen des Gerätes von dieser einen Seite. Zur Unterstützung des Kippvorgangs und Festlegung der jeweiligen Arbeitsposition sind zusätzlich Hinterräder angebracht, die schwenkbar am Gehäuse gelagert sind und durch Verstellung ihrer Schwenkachse die Arbeitsposition bestimmen.

Nachteilig ist, dass solch ein Gerät sehr ausladend baut und aufwendig herzustellen ist. Da der geringe Schwenkwinkel die jeweils nicht in Betrieb befindliche Walze nur unzureichend anhebt, ist im Betrieb damit zu rechnen, dass diese immer wieder aufsetzt. Mit anderen Worten es ist nur ungenügende Bodenfreiheit durch die jeweils nicht benutzte Walze gegeben. Größere Schwenkwinkel zu verwenden verbietet sich aber schon dadurch, dass einerseits das Gehäuse zu groß werden würde und andererseits der Arbeitsraum der Walzen zu voluminös würde und der Auswurf des Kehrichts beziehungsweise des vertikutierten Rasens in die Sammelvorrichtung nicht mehr funktionieren würde.

Ergänzend wird auf die Patentschrift US 2,801,512 verwiesen, die einen handbetriebenen Rasenmäher mit zusätzlich angesetztem Vertikutierer offenbart. Dieses Gerät ist handbetrieben und weist eine über die Laufräder beim manuellen Schieben angetriebene Mähachse auf. Zur Beeinflussung des Andrucks des Vertikutierers kann die Anstellung der Halterung des Vertikutierers verändert werden.

Es ist Aufgabe der Erfindung, ein Kombinationsgerät zur Garten-, Landschafts- oder Hofpflege zur Verfügung zu stellen, welches einerseits auf einfache Weise zwischen zwei unterschiedlichen Arbeitsfunktionen wechseln kann, hierbei kompakt baut, wobei die jeweils nicht genutzte Arbeitsfunktion in eine Position verbracht wird, die beim arbeiten mit dem Gerät auch auf unebenem Boden nicht stört.

Diese Aufgabe wird mit den Merkmalen des Anspruches 1 erfüllt.

Demgemäss schlägt der Erfinder vor, das an sich bekannte Kombinationsgerät zur Garten-, Landschafts- oder Hofpflege mit einem Gehäuse, einer ein- oder mehrteiligen Fahrachse mit zwei koaxial gelagerten Laufrädern, mindestens einem, als Elektromotor oder Verbrennungsmotor ausgebildeten, Antriebsaggregat, einem Führungsgriff, und zwei rotierbaren Arbeitsachsen unterschiedlicher Funktion und um diese angeordnete Arbeitselemente, wobei die Fahrachse und die beiden Arbeitsachsen parallel zueinander angeordnet sind, und die Laufräder und die Arbeitselemente wechselseitig Arbeitsebenen bilden, die sich unter einem Arbeitsebenenwinkel α schneiden, wodurch sich das Kombinationsgerät gegenüber dem Boden um einen Geräteschwenkwinkel β = 180°-α = β'+ β" wechselseitig in zwei Arbeitsstellungen bringen lässt, dahingehend zu verbessern, dass der Arbeitsebenenwinkel α zwischen den beiden Arbeitsebenen A und B derart gewählt ist, dass das Kombigerät in den beiden Arbeitsstellungen jeweils von gegenüberliegenden Seiten geführt wird, wobei das Antriebsaggregat mit zumindest einer der Arbeitsachsen koppelbar ist.

Durch diese erfindungsgemäße Ausgestaltung des Kombigerätes wird es nun möglich ein außerordentlich kompaktes Kombigerät zu bauen, welches durch einfaches Umschwenken und ohne Verstellung von zusätzlichen Hilfsrädern zwischen den seinen beiden unterschiedlichen Funktionen wechseln kann. Hierbei kann vorteilhaft gegenüber dem Stand der Technik erreicht werden, dass beim Wechseln zwischen den Arbeitsstellungen auch der Schwerpunkt - von oben betrachtet - von der einen auf die andere Seite der Fahrachse wechselt. Der Schwerpunkt befindet sich dabei vorteilhaft zwischen der jeweils aktiven Arbeitsachse und der Fahrachse, wodurch ein stabiler Stand des Gerätes auf der jeweils aktiven Arbeitsachse und der Fahrachse erreicht wird. Diese Betrachtung berücksichtigt allerdings nicht eine Sammelvorrichtung und darin befindliches, eingesammeltes Gut; hierfür ist kann eine zusätzliche Stützvorrichtung, wie sie weiter unten beschrieben ist die nötige Stabilität bringen. Vorteilhaft ist außerdem, dass sich beim Verschwenken des Gerätes die nicht in Betrieb befindliche Arbeitsachse weit genug vom Boden entfernt und auch auf unebenen Arbeitsflächen nicht stört.

Eine besonders günstige Ausgestaltung des Kombigerätes kann darin liegen, dass der Geräteschwenkwinkel β zwischen 30° und 120°, vorzugsweise 45° und 90°, vorzugsweise 55° und 75°, vorzugsweise 60° und 70°, liegt.

Hierbei kann es auch besonders vorteilhaft sein, dass die Arbeitsachsen im Querschnitt gesehen innerhalb der Kreisfläche der Laufräder der Fahrachse angeordnet sind.

Bezüglich der Ausgestaltung der Durchmesser von Laufrad D und Arbeitsachse mit seinen Funktionselementen d zeigt sich ein Verhältnis von d/D zwischen 40% bis 80%, vorzugsweise 60% bis 70%, als besonders günstig.

Ebenso ist es vorteilhaft für die Funktion des Kombigerätes, wenn für jede Arbeitsachse ein eigener Arbeitsraum vorgesehen ist, so dass sich klar definierte Luftströmungen ergeben, die besonders günstig für die dauerhafte Reinhaltung der Arbeitsräume sind.

Entsprechend ist es auch günstig, dass für jede Arbeitsachse ein eigener Auswurfkanal vorgesehen ist, der in den jeweiligen Arbeitsraum der Arbeitsachse mündet.

Eine weitere Ausgestaltung des Kombigerätes betrifft den Führungsgriff. Dieser kann starr, jedoch vorzugsweise verstellbar bezüglich seines Anstellwinkels, mit dem Gehäuse verbunden sein, wobei auch ein ausreichend großer Geräteschwenkwinkel notwendig ist.

Alternativ kann der Führungsgriff selbst um einen Griffschwenkwinkel γ schwenkbar mit dem Gehäuse verbunden werden, wobei dieser Griffschwenkwinkel bevorzugt 0° bis 50°, vorzugsweise 20° bis 30°, betragen sollte. Je größer der Griffschwenkwinkel wird, je kleiner kann der Geräteschwenkwinkel ausgeführt werden. Bei einem bestimmten erwünschten gesamten Schwenkwinkel ist dieser also immer die Summe aus Griffschwenkwinkel und Geräteschwenkwinkel.

In einer besonderen Ausführung können die Fahrachse und die beiden Arbeitsachsen, im Querschnitt senkrecht zu den Achsen gesehen, die Eckpunkte eines Dreiecks bilden.

Eine vorteilhafte Ausgestaltung des Kombinationsgerätes kann darin liegen, dass das Dreieck, welches durch die drei Achsen gebildet wird, einen stumpfen Winkel aufweist, dessen Spitze in normaler Arbeitslage nach unten zeigt, wobei diese Spitze durch die Fahrachse gebildet wird.

Dieses beschriebene Dreieck kann vorteilhaft ein gleichschenkliges und in einem Spezialfall ein gleichwinkliges Dreieck darstellen.

Zum Antrieb der Arbeitsachsen kann entweder genau ein Antriebsaggregat vorgesehen werden, welches wahlweise mit zumindest einer Arbeitsachse gekoppelt werden kann, oder es kann je Arbeitsachse ein Antriebsaggregat vorgesehen werden, welches wahlweise einzuschalten ist.

Zur Ankopplung von Antriebsaggregat und Arbeitsachse kann beispielsweise ein Keilriemenantrieb oder ein Zahnriemenantrieb oder ein Kettenantrieb oder Zahnradantrieb vorgesehen werden.

Des Weiteren ist es möglich, eine Umschaltvorrichtung vorzusehen, welche die Aktivierung der Arbeitsachsen, vorzugsweise aufgrund einer Lageänderung des Kombinationsgerätes, vornimmt. Hierdurch bewirkt ein Verschwenken des Kombinationsgerätes von einer auf die andere Seite eine Umschaltung der jeweils unten liegenden, also dem Erdboden zugewandten, Arbeitsachse. Diese Umschaltvorrichtung kann beispielsweise ein elektrischer Lageschalter sein oder es kann sich auch um eine mechanische Umschaltvorrichtung handeln, die auf die unterschiedlichen Lagen des Kombinationsgerätes reagiert.

Als Antriebsaggregat für die Arbeitsachsen ist ein Elektromotor, gegebenenfalls mit Akku, vorgesehen, jedoch besteht auch die Möglichkeit einen Verbrennungsmotor einzusetzen. Vorteilhaft wird dieser - von oben betrachtet - zwischen den beiden Arbeitsachsen platziert, so dass, aufgrund des relativ hohen Gewichtsanteils des Motors am Gesamtgewicht des Gerätes, der Schwerpunkt des Gerätes durch das Verschwenken zwischen den Arbeitspositionen jeweils die Fahrachse passiert und so für einen festen und stabilen Stand in der jeweiligen Arbeitsposition sorgt.

In der Basisversion des erfindungsgemäßen Kombinationsgerätes sind zwei unterschiedliche, fest eingebaute, Arbeitsachsen mit unterschiedlichen Funktionen vorgesehen. Jedoch besteht auch die Möglichkeit mindestens eine Arbeitsachse oder die Arbeitselemente mindestens einer Arbeitsachse auswechselbar zu gestalten, so dass eine Vielfalt von Kombinationsmöglichkeiten der unterschiedlichen Funktionen durch den Anwender gewählt werden können.

Im Falle eines elektrischen Antriebes ist es vorteilhaft, wenn eine Elektrosteckdose, zur Zuführung von Strom, vorgesehen ist, die mittig zur Breitseite des Kombinationsgerätes am Führungsgriff angeordnet ist, wobei die Einsteckrichtung der Elektrosteckdose parallel zur Längsrichtung des Führungsgriffes verläuft. Hierdurch wird erreicht, dass durch ein Verschwenken des Kombinationsgerätes von der einen Arbeitslage zu anderen Arbeitslage die Elektrosteckdose gleichermaßen günstig erreicht werden kann.

In einer weiteren vorteilhaften Ausgestaltung des erfindungsgemäßen Kombinationsgerätes ist vorgesehen, dass mindestens eine Stützvorrichtung vorgesehen ist, welche den Winkel der Arbeitsstellung bestimmen kann. Erfindungsgemäß kann diese über Rollen, Räder oder Kufen verfügen, wobei diese Stützvorrichtung auch schwenkbar ausgestaltet sein kann, so dass beispielhaft durch das Verschwenken der Stützvorrichtung auch die mechanische oder elektrische Umschaltung der jeweils aktivierten Arbeitsachsen vorgenommen wird.

Die Stützvorrichtung kann des Weiteren verstellbar ausgeführt sein, so dass hierdurch die Arbeitshöhe der entsprechenden Arbeitsachse bestimmt wird.

Entsprechend den gängigen Sicherheitsvorschriften ist es auch vorteilhaft, wenn ein elektrischer Sicherheitshandschalter am Führungsgriff, zum Ein- und Ausschalten des mindestens einen Antriebsaggregates, vorgesehen ist, so dass eine Unfallgefahr und Verletzungsgefahr durch die rotierenden Arbeitsachsen weitgehend verhindert wird.

In einer weiteren vorteilhaften Ausgestaltung des Kombinationsgerätes ist vorgesehen, dass dieses über einen Fangkorb, beispielsweise für überschüssige Grasreste oder Kehricht, verfügt, wobei vorzugsweise jeder Arbeitsachse zugeordnet zueinander kompatible Aufhängevorrichtungen für diesen Korb vorgesehen sind, so dass der Fangkorb jeweils wechselseitig für weitere Arbeitsachsen verwendet werden kann. Anstelle oder zusätzlich zu dem oben genannten Fangkorb besteht auch die Möglichkeit eine Auswurfvorrichtung vorzusehen, die einen gerichteten Auswurf, beispielsweise von Gras oder Schnee, ermöglicht, wobei auch hierbei vorzugsweise jeder Arbeitsachse zugeordnet zueinander kompatible Aufhängevorrichtungen vorgesehen sind, die weiterhin vorzugsweise mit den Aufhängevorrichtungen des Fangkorbes zumindest kompatible, vorzugsweise identisch, sind.

Des weiteren kann eine Abdeckung vorgesehen werden, die den Bereich einer Arbeitsachse, vorzugsweise bei deren Nichtgebrauch, abdeckt, wobei auch hier, wie beim Fangkorb und der Auswurfvorrichtung, eine entsprechende kompatible Aufhängevorrichtung vorgesehen ist.

Als Arbeitsachse kann erfindungsgemäß beispielhaft eine Mähspindel, ein Vertikutierer oder Rasenlüfter, ein Kehrelement, ein Laubrechen, eine Bodenfräse oder eine Schneefräse verwendet werden.

Der Führungsgriff des Kombigerätes kann höhenverstellbar ausgebildet werden, wobei vorzugsweise eine Teleskopverstellung und/oder Schwenkvorrichtung für den ganzen oder einen Teil des Führungsgriffes verwendet wird.

Weitere Ausgestaltungen der Erfindung und weitere Merkmale und Vorteile ergeben sich aus den Ansprüchen und aus der nachfolgenden Beschreibung bevorzugter Ausführungsbeispiele unter Bezugnahme auf die Zeichnungen. Es zeigen im Einzelnen:
- Fig. 1:: Schematische Darstellung des Kombigerätes mit verdeutlichten Schwenkwinkeln, senkrecht aufgestellt, Arbeitsachsen außerhalb des Laufradkreises;
- Fig. 2:: Schematische Darstellung des Kombigerätes mit verdeutlichten Schwenkwinkeln, senkrecht aufgestellt, Arbeitsachsen innerhalb des Laufradkreises;
- Fig. 3:: Seitenansicht des Kombinationsgerätes in Arbeitsstellung für die erste Arbeitsachse;
- Fig. 4:: Seitenansicht des Kombinationsgerätes in Mittelstellung zwischen den beiden Arbeitsachsen - ohne Fangkorb -;
- Fig. 5:: Seitenansicht des Kombinationsgerätes in Arbeitsstellung für die zweite Arbeitsachse;
- Fig. 6 - 9:: Vollständige Seitenansicht des Kombinationsgerätes mit und ohne Fangkorb;
- Fig. 10 - 11:: Aufsichten auf das Kombinationsgerät;
- Fig. 12:: Schrägansicht von vorne;
- Fig. 13:: Schrägansicht von hinten;
- Fig. 14:: Ansicht in Fahrtrichtung;
- Fig. 15:: Seitenansicht des Kombinationsgerätes mit Arbeitskammern und gerader Trennwand;
- Fig. 16:: Seitenansicht des Kombinationsgerätes mit Arbeitskammern und gebogener Trennwand.

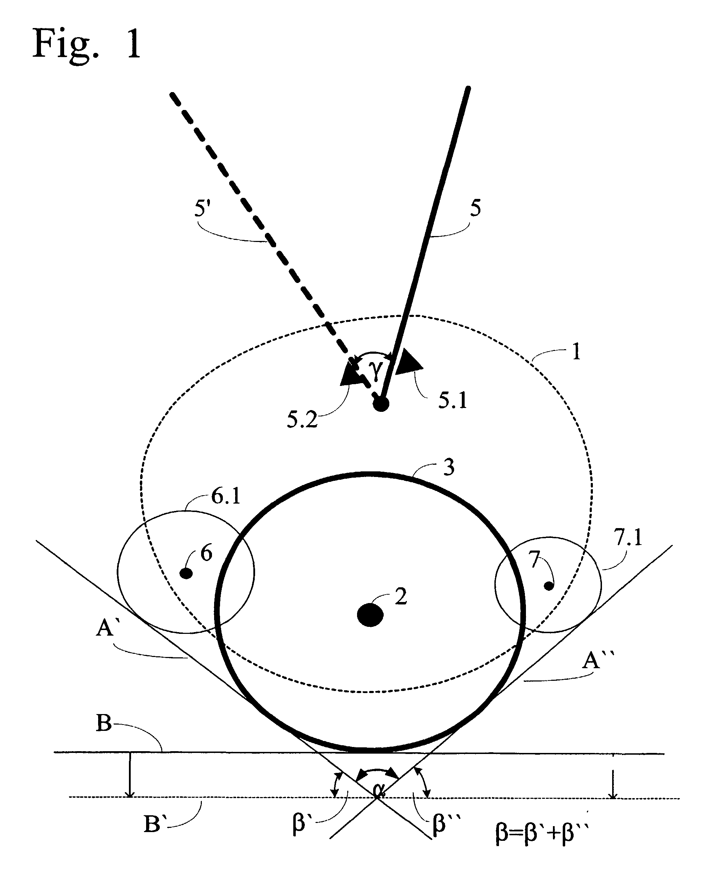

Die Figur 1 zeigt eine schematische Darstellung eines erfindungsgemäßen Kombigerätes in Seitenansicht, bei dem zur Verdeutlichung sowohl der Geräteschwenkwinkel β, als auch der Griffschwenkwinkel γ dargestellt ist.

Diese Figur zeigt das große Laufrad 3 mit seiner Fahrachse 2, das mit seinem Umfang von den beiden Umfängen der Arbeitselemente 6.1 beziehungsweise 7.1 der Arbeitsachsen 6 und 7 geschnitten wird. Die Arbeitsachsen 6 und 7 befinden sich jedoch außerhalb der Kreisfläche des Laufrades 3. Tangential angelehnt an die Arbeitselemente 6.1 beziehungsweise 7.1 und das Laufrad 3 sind jeweils zwei Arbeitsebenen A' und A'' gezeigt, die sich in einem Ebenenwinkel α schneiden. Der Boden B schneidet, verdeutlicht durch die nach unten parallelverschobene gestrichelte Linie B', die Arbeitsebenen A' und '' mit den zwei Teilschwenkwinkeln β' und β'', die zusammen den gesamten Schwenkwinkel β des Gerätes mit β=β'+β'' bilden und zusammen mit dem Ebenenwinkel α insgesamt einen Winkel von 180° erzeugen. Es gilt also 180°= α + β = α + β'+β'' oder β = 180° - α.

Ist der Führungsgriff 5 am Gehäuse 1 fixiert, so bildet der Geräteschwenkwinkel β den gesamten Schwenkwinkel um den der Führungsgriff letztendlich geschwenkt wird, um das Kombigerät von der einen Arbeitsposition in die andere Arbeitsposition zu bewegen. Hierbei erfolgt im Normalfall auch eine Umkehr der Fahrtrichtung des Gerätes.

In der gezeigten Darstellung verfügt der Führungsgriff 5 jedoch zusätzlich über einen Griffschwenkwinkel γ, der durch die beiden Anschläge 5.1 und 5.2 begrenzt wird. Aufgrund dieses zusätzlichen Griffschwenkwinkels γ ist es möglich den Geräteschwenkwinkel β relativ klein zu halten, jedoch sollte auf jeden Fall durch das Schwenken des Gerätes um den Geräteschwenkwinkel β eine Verschiebung des Schwerpunktes des Gerätes so erfolgen, dass das Gerät jeweils in seiner Arbeitsposition selbständig durch das zentral liegende Laufrad und eine der Arbeitsachsen am Umkippen gehindert werden. Die Anschläge 5.1 und 5.2 können auch einstellbar ausgeführt werden, um den Griffschwenkwinkel zu beeinflussen und sich so der Größe der Bedienungsperson anzupassen.

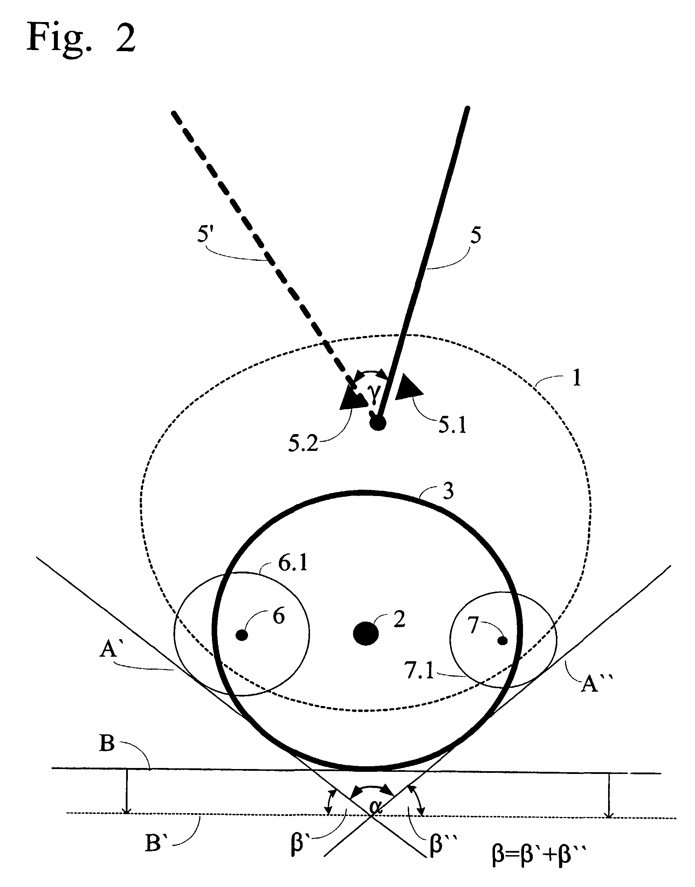

Die Figur 2 zeigt grundsätzlich die gleiche schematische Darstellung des senkrecht gestellten Kombigerätes mit verdeutlichten Schwenkwinkeln wie die Figur 1. Der wesentliche Unterschied liegt in der Anordnung der Arbeitsachsen 6 und 7, die sich hier innerhalb der Kreisfläche des Laufrades 3 befinden und dadurch zu einer besonders kompakten Bauweise führen. Ergänzend ist auch noch der Durchmesser D des Laufrades 3 und die Durchmesser d der Arbeitselemente 6.1 und 7.1 eingezeichnet, wobei darauf hinzuweisen ist, dass diese nicht unbedingt gleich groß sein müssen.

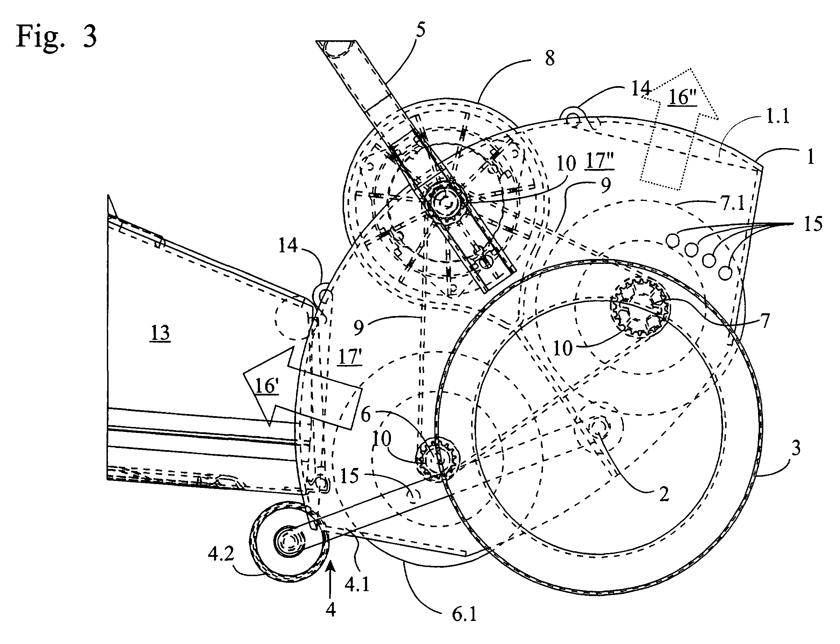

Die Figur 3 zeigt eine seitliche Detailansicht eines, bezüglich der Anordnung der Laufräder etwas anderen erfindungsgemäßen Kombinationsgerätes in einer Arbeitsstellung für eine erste Arbeitsachse 6. Das Kombinationsgerät verfügt über zwei Laufräder 3, welche an einer Fahrachse 2 gelagert sind. In Fahrtrichtung des Kombinationsgerätes vor und hinter der Fahrachse 2 befinden sich, parallel zu dieser ausgerichtet, zwei Arbeitsachsen 6 und 7, die einen Höhenversatz zur Fahrachse 2 aufweisen, so dass die Mittelpunkte der Achsen ein stumpfwinkliges Dreieck bilden, dessen stumpfer Winkel der Spitze an der Fahrachse 2 zugeordnet ist. Durch diese Anordnung ist es möglich, das Kombinationsgerät durch ein Verschwenken um die Fahrachse 2 entweder für die erste Arbeitsachse oder die zweite Arbeitsachse in Betrieb zu nehmen, indem die jeweilige Arbeitsachse dem Boden genähert wird. Beide Arbeitsachsen 6 und 7 weisen jeweils, meist unterschiedliche Arbeitselemente 6.1 beziehungsweise 7.1 auf, so dass sie beispielsweise zum Kehren, Fräsen, Schneeräumen, Rasenmähen, Vertikutieren, Rasenlüften oder Rechen verwendet werden können. Besonders vorteilhaft hat sich die Kombination Mähen und Vertikutieren erwiesen.

Die beiden Arbeitsachsen 6 und 7 werden in dem gezeigten Beispiel über einen gemeinsamen Elektromotor 8 angetrieben, welcher über einen Keilriemenantrieb, bestehend aus den Zahnrädern 10 und den diese umspannenden Keilriemen 9, verfügt.

Des Weiteren ist am Gehäuse eine Stützvorrichtung 4 vorgesehen, welche einen Schwenkarm 4.1 aufweist. Der Schwenkarm 4.1 ist schwenkbar um die Fahrachse 2 gelagert und verfügt auf der gegenüberliegenden Seite über eine Rolle 4.2, welche die Arbeitshöhe der Arbeitselemente 6.1 über einen Anschlag bestimmt.

Außerdem verfügt das Kombinationsgerät über einen Fangkorb 13, der in die beiden Aufhängevorrichtungen 14 des Fangkorbes eingehängt werden kann und somit zum Sammeln für beide Arbeitsachsen geeignet ist. Beim Einhängen des Fangkorbes 13 wird eine Klappe 1.1 im Gehäuse 1 geöffnet, die sich dann auf die Oberseite des Fangkorbes legen kann, und damit einen Auswurfkanal 16' beziehungsweise 16'' aus dem Arbeitsraum der jeweiligen Arbeitsachse zum Fangkorb frei gibt. In der gezeigten Darstellung bildet die Aufhängvorrichtung 14 gleichzeitig die Aufhängung und Kippachse der Klappen 1.1.

Soll nun die Arbeitsachse 7 in Einsatz kommen, so ist es lediglich notwendig, das Kombinationsgerät um etwa 90° um die Fahrachse 2 zu schwenken, wobei gleichzeitig ein Umschwenken des Stützelementes 4 erfolgt, welches auf der rechten Seite über eine vierstufige Höhenverstellvorrichtung 15 verfügt.

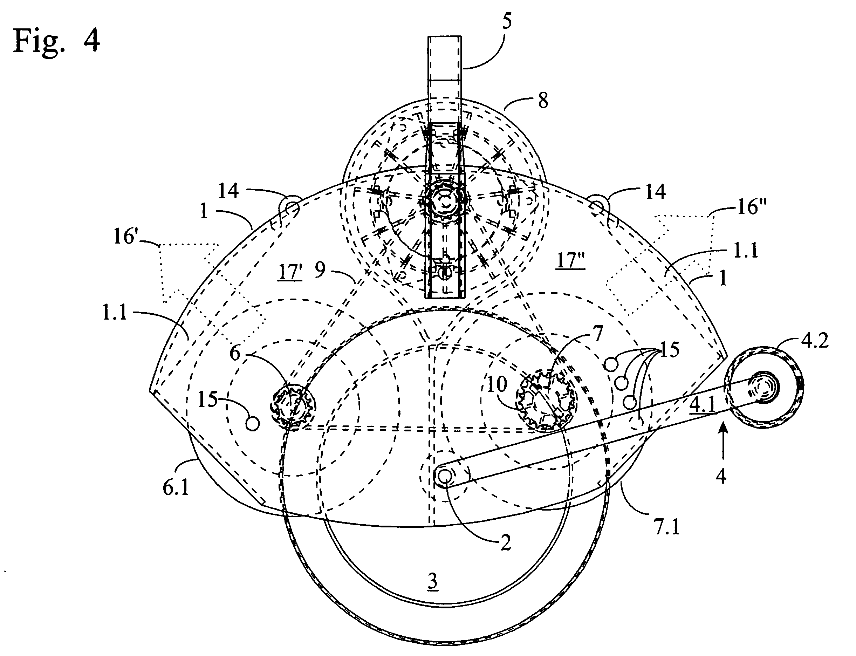

In der Figur 4 ist das Kombinationsgerät senkrecht aufgestellt gezeigt, wobei die Stützrolle bereits auf die Seite des Arbeitelementes 7.1 geschwenkt ist. Hier stehen für die Stützrolle 4.2 und deren Schwenkarm 4.1 mehrere Rastierungen zur Verfügung, während auf der linken Seite lediglich eine Höheneinstellmöglichkeit vorliegt.

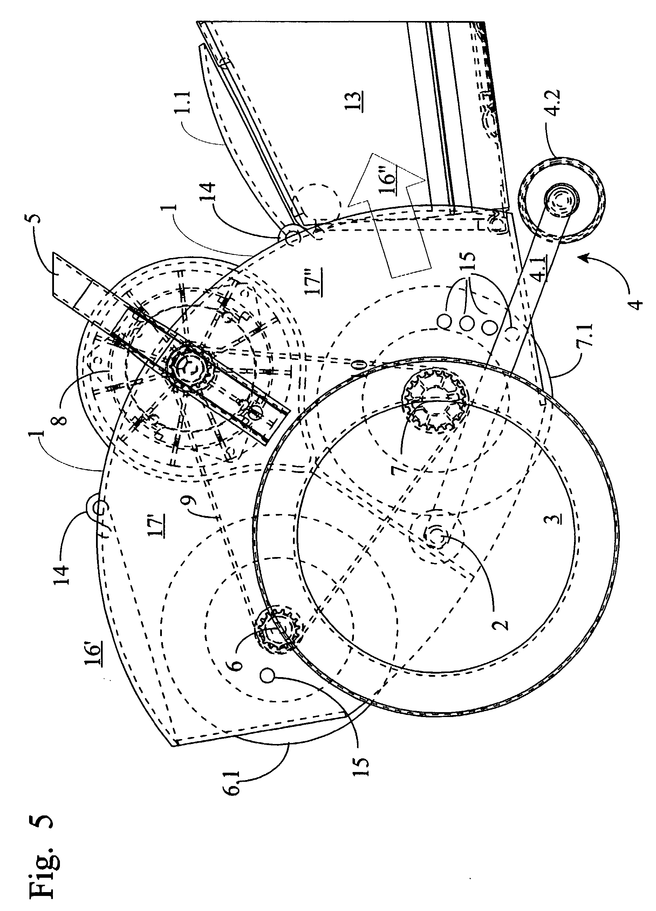

Die Figur 5 zeigt nun das Kombinationsgerät in der endgültigen Arbeitsposition für die Arbeitsachse 7. Der Fangkorb 13 ist bereits auf der rechten Seite in die Aufhängevorrichtung eingesetzt und das Stützelement 4 befindet sich in der höchsten Arbeitseinstellung. Auf diese Weise ist es nun sehr einfach möglich, zwischen verschiedenen Arbeitsfunktionen zu wechseln und damit das erfindungsgemäße Gartengerät vielseitig zu verwenden.

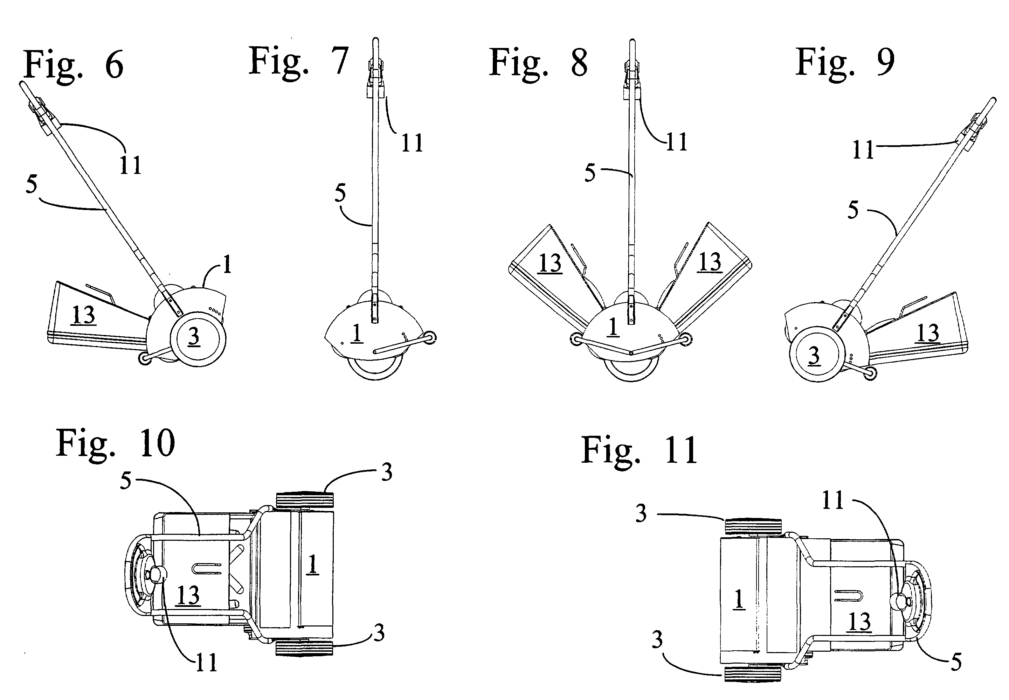

Die Figuren 6 bis 9 zeigen das erfindungsgemäße Kombinationsgerät in drei verschiedenen Stellungen.

In der Figur 6 befindet sich das Kombinationsgerät in einer ersten Arbeitsposition mit einem entsprechend eingehängten Fangkorb 13.

Die Figur 7 zeigt eine Übergangs- oder Parkposition des Gerätes ohne Fangkorb.

In der Figur 8 sind in der Übergangsposition zwei Fangkörbe eingehängt, während die Figur 9 das Kombinationsgerät in der zweiten Arbeitsstellung zeigt.

Die Figuren 10 und 11 zeigen jeweils eine Aufsicht auf das Gerät, entsprechend der Stellung in Figur 6 und der Stellung in Figur 9.

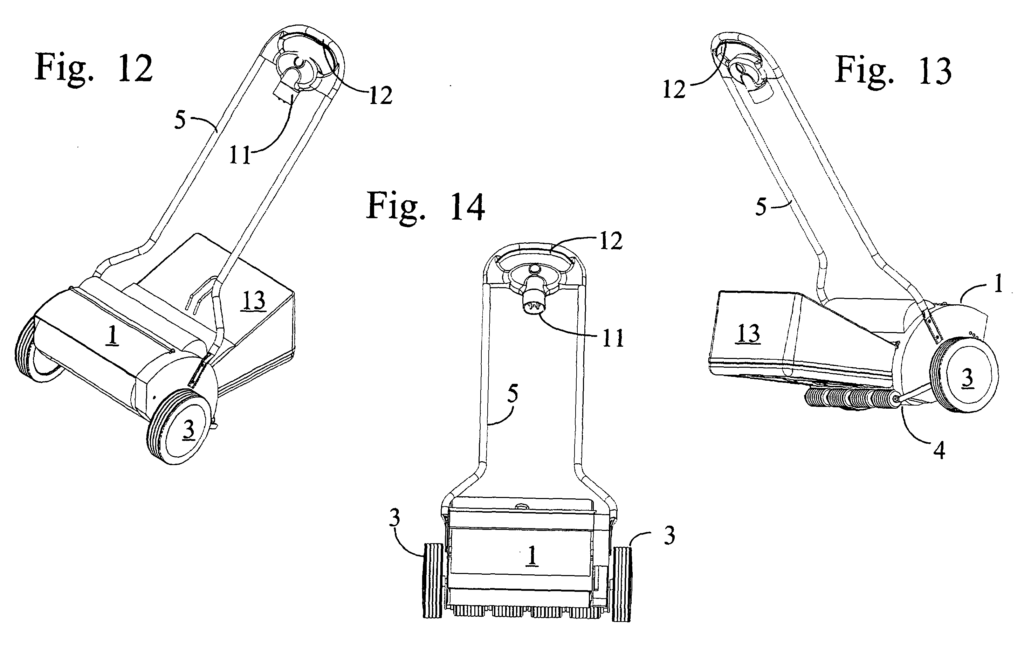

In den Figuren 12 bis 14 ist die Anordnung des Elektrosteckers 11 zentral am Führungsgriff 5 zu erkennen. Der Elektrostecker 11 ist hierbei in der Ebene des Gestänges des Führungsgriffes 5 angebracht, so dass ein entsprechendes Kabel in beiden Arbeitsstellungen des Kombinationsgerätes eingesteckt werden kann.

Zusätzlich zeigen die Figuren 12 bis 14 den Sicherheitsschalter 12 am oberen Teil des Führungsgriffes 5, der als Bügel ausgebildet ist und sich der Kurvatur des Führungsgriffes 5 im oberen Teil anpaßt.

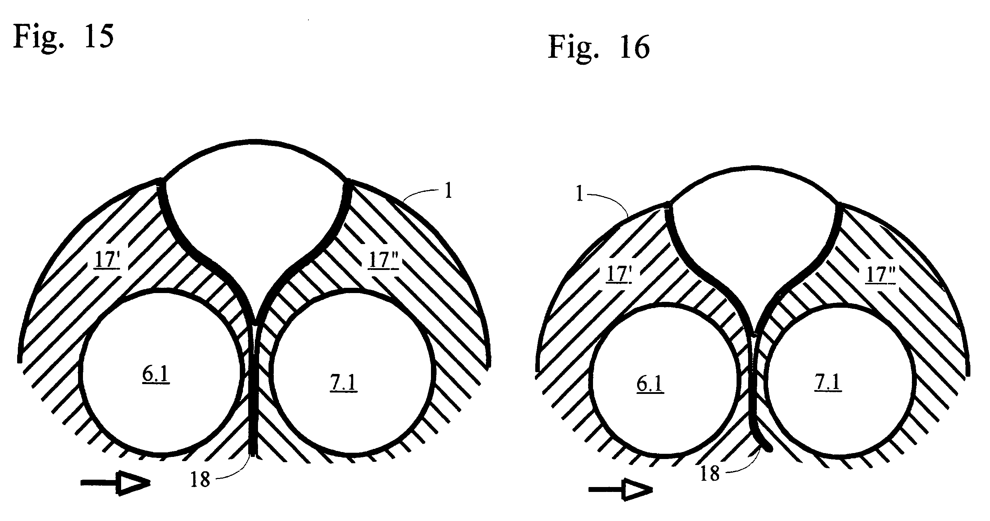

Die Figuren 15 und 16 zeigen eine schematische Seitenansicht des Kombinationsgerätes, in der besonders die Ausführung der beiden Arbeitsräume 17' und 17'' der beiden Arbeitselemente 6.1 (Mähen) und 7.1 (Vertikutieren) hervorgehoben ist. Zur besseren Übersicht wurde auf die Darstellung des Laufrades verzichtet. Zwischen den Arbeitsräumen 17' und 17'' befindet sich eine Zwischenwand 18, die in der Figur 15 gerade auslaufend und in der Figur 16, bezogen auf die Arbeitsrichtung (dargestellt durch den Pfeil) des Arbeitselementes 6.1 für das Mähen, nach vorne gekrümmt ausgeführt ist. Die in Arbeitsrichtung gekrümmte Ausführung ist besonders vorteilhaft, da sich durch diese das zu schneidende Gras besonders gut aufrichtet. Anzumerken ist auch noch, dass die auch durchbrochen ausgeführt werden kann, so dass ein gewisser Druckausgleich zwischen den Arbeitsräumen möglich ist.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

Insgesamt wird also durch die Erfindung ein Kombinationsgerät zur Garten-, Landschafts- oder Hofpfleqe zur Verfügung gestellt, welches auf einfache Weise zwischen zwei unterschiedlichen Arbeitsfunktionen wechseln kann, ohne dass hierzu ein Austausch von Teilen des Gerätes, insbesondere der Arbeitsachsen oder Arbeitselemente, notwendig wären.

### Bezugszeichenliste

- 1: Gehäuse
- 1.1: Klappe
- 2: Fahrachse
- 3: Laufrad
- 4: Stützvorrichtung
- 4.1: Schwenkarm
- 4.2: Rolle
- 5: Führungsgriff
- 5.1, 5.2: Anschläge
- 6: Arbeitsachse
- 6.1: Arbeitselemente
- 7: Arbeitsachse
- 7.1: Arbeitselemente
- 8: Antriebsaggregat
- 9: Keilriemen
- 10: Zahnräder
- 11: Elektrostecker
- 12: Sicherheitsschalter
- 13: Fangkorb
- 14: Aufhängevorrichtung für den Fangkorb
- 15: Höhenverstellvorrichtung
- 16', 16'': Auswurfkanal
- 17', 17'': Arbeitsraum
- 18: Zwischenwand
- A', A'': Arbeitsebenen
- B: Boden
- B': parallel verschobene Bodenebene
- α: Ebenenwinkel
- β: Geräteschwenkwinkel
- β', β": linker und rechter Teilwinkel des Geräteschwenkwinkels
- γ: Griffschwenkwinkel

## Patentansprüche

1. Kombinationsgerät zur Garten-, Landschafts- oder Hofpflege mit:
1.1. einem Gehäuse (1),
1.2. einer ein- oder mehrteiligen Fahrachse (2) mit zwei koaxial gelagerten Laufrädern (3),
1.3. mindestens einem, als Elektromotor oder Verbrennungsmotor ausgebildeten, Antriebsaggregat (8),
1.4. einem Führungsgriff (5), und
1.5. zwei rotierbaren Arbeitsachsen (6, 7) unterschiedlicher Funktion und um diese angeordnete Arbeitselemente (6.1 und 7.1), wobei
1.6. die Fahrachse (2) und die beiden Arbeitsachsen (6, 7) parallel zueinander angeordnet sind, und
1.7. die Laufräder (3) und die Arbeitselemente (6.1, 7.1) wechselseitig Arbeitsebenen (A', A") bilden, die sich unter einem Arbeitsebenenwinkel (α) schneiden, wodurch sich das Kombinationsgerät gegenüber dem Boden (B) um einen Geräteschwenkwinkel (β=180°-α=β'+β'') wechselseitig in zwei Arbeitsstellungen bringen lässt,
**dadurch gekennzeichnet, dass**
1.8. der Ebenenwinkel (α) zwischen den beiden Arbeitsebenen (A, B) derart gewählt ist, dass das Kombigerät in den beiden Arbeitsstellungen jeweils von gegenüberliegenden Seiten geführt wird, wobei
1.9. das Antriebsaggregat (8) mit zumindest einer der Arbeitsachsen (6, 7) koppelbar ist.

2. Kombinationsgerät gemäß dem voranstehenden Anspruch 1, **dadurch gekennzeichnet, dass** der Geräteschwenkwinkel (β) 30° bis 120°, vorzugsweise 45° bis 90°, vorzugsweise 55° bis 75°, vorzugsweise 60° bis 70° beträgt.

3. Kombinationsgerät gemäß dem voranstehenden Anspruch 1, **dadurch gekennzeichnet, dass** die Arbeitsachsen (6, 7) im Querschnitt gesehen innerhalb der Kreisfläche der Laufräder (3) der Fahrachse (2) angeordnet sind.

4. Kombinationsgerät gemäß einem der voranstehenden Ansprüche, **dadurch gekennzeichnet, dass** für jede Arbeitsachse (6, 7) ein eigener Arbeitsraum (17', 17''), vorzugsweise mit eigenem Auswurfkanal (16', 16'') vorgesehen ist.

5. Kombinationsgerät gemäß einem der voranstehenden Ansprüche, **dadurch gekennzeichnet, dass** der Führungsgriff (5) starr, jedoch vorzugsweise verstellbar bezüglich seines Anstellwinkels, mit dem Gehäuse verbunden ist.

6. Kombinationsgerät gemäß einem der voranstehenden Ansprüche 1 bis 4, **dadurch gekennzeichnet, dass** der Führungsgriff (5) um einen Griffschwenkwinkel (γ) schwenkbar mit dem Gehäuse verbunden ist, wobei der Griffschwenkwinkel (γ) vorzugsweise 0° bis 50°, vorzugsweise 20° bis 30°, beträgt.

7. Kombinationsgerät gemäß einem der voranstehenden Ansprüche, **dadurch gekennzeichnet, dass** genau ein Antriebsaggregat (8) vorgesehen ist, welches wahlweise zumindest mit einer der Arbeitsachsen (6, 7) gekoppelt werden kann.

8. Kombinationsgerät gemäß einem der voranstehenden Ansprüche, **dadurch gekennzeichnet, dass** je Arbeitsachse (6, 7) genau ein Antriebsaggregat (8) vorgesehen ist, welches wahlweise eingeschaltet werden kann.

9. Kombinationsgerät gemäß dem der voranstehenden Anspruch 15, **dadurch gekennzeichnet, dass** das Antriebsaggregat (8) von oben gesehen zwischen den beiden Arbeitsachsen (6, 7) angeordnet ist.

10. Kombinationsgerät gemäß einem der voranstehenden Ansprüche, **dadurch gekennzeichnet, dass** zur Ankopplung von Antriebsaggregat und Arbeitsachse ein Keilriemenantrieb (9, 10) oder Zahnriemenantrieb oder Kettenantrieb oder Zahnradantrieb vorgesehen ist.

11. Kombinationsgerät gemäß einem der voranstehenden Ansprüche, **dadurch gekennzeichnet, dass** eine Umschaltvorrichtung vorgesehen ist, welche die Aktivierung der Arbeitsachsen (6, 7), vorzugsweise aufgrund einer Lageänderung des Kombinationsgerätes, vornimmt.

12. Kombinationsgerät gemäß einem der voranstehenden Ansprüche, **dadurch gekennzeichnet, dass** mindestens eine Arbeitsachse (6, 7) und/oder die Arbeitselemente (6.1, 7.1) mindestens einer Arbeitsachse (6, 7) auswechselbar ist/sind.

13. Kombinationsgerät gemäß einem der voranstehenden Ansprüche, **dadurch gekennzeichnet, dass** eine Elektrosteckdose (11) zur Zuführung von Strom vorgesehen und vorzugsweise mittig zur Breitseite des Kombinationsgerätes am Führungsgriff (5) angeordnet ist, wobei die Einsteckrichtung der Elektrosteckdose (11) parallel zur Längsrichtung des Führungsgriffes (5) verläuft.

14. Kombinationsgerät gemäß einem der voranstehenden Ansprüche, **dadurch gekennzeichnet, dass** mindestens eine Stützvorrichtung (4), vorzugsweise mit Rollen (4.2), Räder oder Kufen, vorgesehen ist.

15. Kombinationsgerät gemäß dem voranstehenden Anspruch, **dadurch gekennzeichnet, dass** die Stützvorrichtung (4) schwenkbar ausgebildet und mit einer mechanischen oder elektrischen Umschaltvorrichtung gekoppelt ist, so dass beim Umschwenken die jeweils zugeordnete Arbeitsachse (6, 7) aktiviert wird.

16. Kombinationsgerät gemäß einem der voranstehenden Ansprüche, **dadurch gekennzeichnet, dass** ein elektrischer Sicherheitshandschalter (12) am Führungsgriff (5) zum Ein- und Ausschalten des mindestens einen Antriebsaggregates (8) vorgesehen ist.

17. Kombinationsgerät gemäß einem der voranstehenden Ansprüche, **dadurch gekennzeichnet, dass** mindestens ein Fangkorb (13), gegebenenfalls mit eingelegtem Filtersack, vorgesehen ist, wobei vorzugsweise jeder Arbeitsachse (6, 7) zugeordnet zueinander kompatible Aufhängevorrichtungen (14) vorgesehen sind.

18. Kombinationsgerät gemäß einem der voranstehenden Ansprüche, **dadurch gekennzeichnet, dass** eine Auswurfvorrichtung vorgesehen ist, wobei vorzugsweise jeder Arbeitsachse (6, 7) zugeordnet zueinander kompatible Aufhängevorrichtungen (14) vorgesehen sind.

19. Kombinationsgerät gemäß einem der voranstehenden Ansprüche, **dadurch gekennzeichnet, dass** eine Abdeckung (1.1) vorgesehen ist, die den Bereich einer Arbeitsachse (6, 7) bei Nichtgebrauch abdeckt, wobei vorzugsweise jeder Arbeitsachse (6, 7) zugeordnet zueinander kompatible Aufhängevorrichtungen (14) hierfür vorgesehen sind.

20. Kombinationsgerät gemäß einem der voranstehenden Ansprüche, **dadurch gekennzeichnet, dass** der Führungsgriff (5) höhenverstellbar ausgebildet ist, vorzugsweise durch Teleskopverstellung und/oder Schwenkvorrichtung für den ganzen oder einen Teil des Führungsgriffes (5).

## Claims

1. Combined tool for garden, landscape or yard care, having:
1.1 a housing (1),
1.2 a one- or multi-piece travel axle (2) with two coaxially mounted running wheels (3),
1.3 at least one drive unit (8) designed as an electric motor or internal combustion engine,
1.4 a guide handle (5), and
1.5 two rotatable working axles (6, 7) having a different function and working elements (6.1 and 7.1) arranged around said working axles (6, 7),
1.6 the travel axle (2) and the two working axles (6, 7) being arranged parallel to one another, and
1.7 the running wheels (3) and the working elements (6.1, 7.1) mutually forming working planes (A', A'') which intersect at a working plane angle (α), as a result of which the combined tool can be brought alternately into two working positions relative to the ground (B) by a tool pivot angle (β = 180° - α = β' + β''),
**characterized in that**
1.8 the plane angle (α) between the two working planes (A, B) is selected in such a way that the combined tool is guided in the two working positions in each case from opposite sides,
1.9 it being possible for the drive unit (8) to be coupled to at least one of the working axles (6, 7).

2. Combined tool according to the preceding Claim 1, **characterized in that** the tool pivot angle (β) is 30° to 120°, preferably 45° to 90°, preferably 55° to 75°, preferably 60° to 70°.

3. Combined tool according to the preceding Claim 1, **characterized in that** the working axles (6, 7), as viewed in cross section, are arranged within the circular area of the running wheels (3) of the travel axle (2).

4. Combined tool according to one of the preceding claims, **characterized in that** a separate working space (17', 17''), preferably with a separate discharge passage (16', 16''), is provided for each working axle (6, 7).

5. Combined tool according to one of the preceding claims, **characterized in that** the guide handle (5) is rigidly connected to the housing, but preferably in an adjustable manner with respect to its setting angle.

6. Combined tool according to one of the preceding Claims 1 to 4, **characterized in that** the guide handle (5) is connected to the housing in such a way as to be pivotable by a handle pivot angle (γ), the handle pivot angle (γ) preferably being 0° to 50°, preferably 20° to 30°.

7. Combined tool according to one of the preceding claims, **characterized in that** just one drive unit (8) is provided, which can be optionally coupled at least to one of the working axles (6, 7).

8. Combined tool according to one of the preceding claims, **characterized in that** one drive unit (8), which can be optionally switched on, is provided for each working axle (6, 7).

9. Combined tool according to one of the preceding claims, **characterized in that** the drive unit (8), as viewed from above, is arranged between the two working axles (6, 7).

10. Combined tool according to one of the preceding claims, **characterized in that** a V-belt drive (9, 10) or a toothed-belt drive or a chain drive or a gear drive is provided for coupling the drive unit and working axle.

11. Combined tool according to one of the preceding claims, **characterized in that** a changeover device is provided which activates the working axles (6, 7), preferably on account of a change in position of the combined tool.

12. Combined tool according to one of the preceding claims, **characterized in that** at least one working axle (6, 7) and/or the working elements (6.1, 7.1) of at least one working axle (6, 7) can be exchanged.

13. Combined tool according to one of the preceding claims, **characterized in that** an electrical socket (11) for feeding current is provided and is arranged on the guide handle (5) preferably centrally relative to the wide side of the combined tool, the plug-in direction of the electrical socket (11) running parallel to the longitudinal direction of the guide handle (5).

14. Combined tool according to one of the preceding claims, **characterized in that** at least one supporting device (4), preferably having rollers (4.2), wheels or skids, is provided.

15. Combined tool according to the preceding claim, **characterized in that** the supporting device (4) is of pivotable design and is coupled to a mechanical or electrical changeover device, so that the respectively assigned working axle (6, 7) is activated when said supporting device (4) is swung around.

16. Combined tool according to one of the preceding claims, **characterized in that** an electrical manual safety switch (12) is provided on the guide handle (5) for switching the at least one drive unit (8) on and off.

17. Combined tool according to one of the preceding claims, **characterized in that** at least one collecting basket (13), possibly with inserted filter bag, is provided, suspension devices (14) being provided which are preferably assigned to each working axle (6, 7) and are compatible with one another.

18. Combined tool according to one of the preceding claims, **characterized in that** a discharge device is provided, suspension devices (14) being provided which are preferably assigned to each working axle (6, 7) and are compatible with one another.

19. Combined tool according to one of the preceding claims, **characterized in that** a cover (1.1) is provided which covers the region of a working axle (6, 7) when not in use, suspension devices (14) being provided for this purpose, these suspension devices (14) being preferably assigned to each working axle (6, 7) and being compatible with one another.

20. Combined tool according to one of the preceding claims, **characterized in that** the guide handle (5) is designed to be vertically adjustable, preferably by telescopic adjustment and/or by a pivoting device for the entire guide handle (5) or for one part of the guide handle (5).

## Revendications

1. Outil combiné pour soigner le jardin, le paysage ou l'enclos, comprenant :
1.1. un boîtier (1),
1.2. un axe de conduite (2) en une ou plusieurs parties avec deux roues de roulement (3) montées coaxialement,
1.3. au moins une unité d'entraînement (8) réalisée sous forme de moteur électrique ou de moteur à combustion,
1.4. un manche de guidage (5) et
1.5. deux axes de travail rotatifs (6, 7) de fonction différente et des éléments de travail (6.1 et 7.1) disposés autour de ceux-ci, où
1.6. l'axe de conduite (2) et les deux axes de travail (6, 7) sont disposés parallèlement les uns aux autres et
1.7. les roues de roulement (3) et les éléments de travail (6.1, 7.1) forment des plans de travail alternés (A', A''), qui se coupent suivant un angle de plan de travail (α), l'outil combiné pouvant de ce fait être amené en alternance dans deux positions de travail par rapport au sol (B) suivant un angle de pivotement d'outil (β = 180° α-β'+β"),
**caractérisé en ce que**
1.8. l'angle du plan (α) entre les deux plans de travail (A, B) est choisi de telle sorte que l'outil combiné soit guidé dans les deux positions de travail à chaque fois depuis des côtés opposés, où
1.9. l'unité d'entraînement (8) peut être accouplée à au moins l'un des axes de travail (6, 7).

2. Outil combiné selon la revendication précédente 1, **caractérisé en ce que** l'angle de pivotement d'outil (β) vaut 30 à 120°, de préférence 45 à 90°, de préférence 55 à 75°, de préférence 60 à 70°.

3. Outil combiné selon la revendication précédente 1, **caractérisé en ce que** les axes de travail (6, 7), vus en section transversale, sont disposés à l'intérieur de la surface circulaire des roues de roulement (3) de l'axe de conduite (2).

4. Outil combiné selon l'une quelconque des revendications précédentes, **caractérisé en ce que** pour chaque axe de travail (6, 7), un espace de travail propre (17', 17"), de préférence avec un canal d'éjection propre (16', 16"), est prévu.

5. Outil combiné selon l'une quelconque des revendications précédentes, **caractérisé en ce que** le manche de guidage (5) est connecté rigidement au boîtier, mais de préférence de manière réglable par rapport à son angle d'inclinaison.

6. Outil combiné selon l'une quelconque des revendications précédentes 1 à 4, **caractérisé en ce que** le manche de guidage (5) est connecté au boîtier de manière à pouvoir pivoter autour d'un angle de pivotement du manche (γ), l'angle de pivotement du manche (γ) étant de préférence compris entre 0° et 50°, de préférence entre 20° et 30°.

7. Outil combiné selon l'une quelconque des revendications précédentes, **caractérisé en ce que** l'on prévoit exactement une unité d'entraînement (8) qui peut être accouplée au choix au moins à l'un des axes de travail (6, 7).

8. Outil combiné selon l'une quelconque des revendications précédentes, **caractérisé en ce que** chaque axe de travail (6, 7) est prévu avec exactement une unité d'entraînement (8) qui peut être enclenchée de manière sélective.

9. Outil combiné selon l'une quelconque des revendications précédentes 15, **caractérisé en ce que** l'unité d'entraînement (8) est disposée, vu de dessus, entre les deux axes de travail (6, 7).

10. Outil combiné selon l'une quelconque des revendications précédentes, **caractérisé en ce que** pour l'accouplement de l'unité d'entraînement et de l'axe de travail, on prévoit un entraînement par courroie trapézoïdale (9, 10) ou un entraînement par courroie dentée ou un entraînement par chaîne ou un entraînement par roue dentée.

11. Outil combiné selon l'une quelconque des revendications précédentes, **caractérisé en ce que** l'on prévoit un dispositif de commutation qui assure l'activation des axes de travail (6, 7), de préférence sur la base d'une modification de position de l'outil combiné.

12. Outil combiné selon l'une quelconque des revendications précédentes, **caractérisé en ce qu'**au moins un axe de travail (6, 7) et/ou les éléments de travail (6.1, 7.1) d'au moins un axe de travail (6, 7) est/sont remplaçable(s).

13. Outil combiné selon l'une quelconque des revendications précédentes, **caractérisé en ce qu'**une embase électrique (11) pour l'alimentation en courant est prévue et est disposée de préférence au milieu par rapport au côté large de l'outil combiné sur le manche de guidage (5), la direction d'enfichage de l'embase électrique (11) étant parallèle à la direction longitudinale du manche de guidage (5).

14. Outil combiné selon l'une quelconque des revendications précédentes, **caractérisé en ce qu'**au moins un dispositif de support (4), de préférence pourvu de rouleaux (4.2), de roues ou de patins est prévu.

15. Outil combiné selon la revendication précédente, **caractérisé en ce que** le dispositif de support (4) est réalisé de manière pivotante et est accouplé à un dispositif de commutation mécanique ou électrique de sorte que lors du pivotement, l'axe de travail associé respectif (6, 7) soit activé.

16. Outil combiné selon l'une quelconque des revendications précédentes, **caractérisé en ce que** l'on prévoit un disjoncteur manuel de sécurité électrique (12) sur le manche de guidage (5) pour l'enclenchement ou la coupure de l'au moins une unité d'entraînement (8).

17. Outil combiné selon l'une quelconque des revendications précédentes, **caractérisé en ce que** l'on prévoit au moins un panier de collecte (13), éventuellement avec un sac filtrant incorporé, des dispositifs d'accrochage (14) compatibles les uns avec les autres étant prévus de manière associée de préférence à chaque axe de travail (6, 7).

18. Outil combiné selon l'une quelconque des revendications précédentes, **caractérisé en ce que** l'on prévoit un dispositif d'éjection, des dispositifs d'accrochage (14) compatibles les uns avec les autres étant prévus de manière associée de préférence à chaque axe de travail (6, 7).

19. Outil combiné selon l'une quelconque des revendications précédentes, **caractérisé en ce que** l'on prévoit un recouvrement (1.1) qui recouvre la région d'un axe de travail (6, 7) lorsqu'il n'est pas utilisé, des dispositifs d'accrochage (14) compatibles les uns avec les autres étant prévus à cet effet de manière associée de préférence à chaque axe de travail (6, 7).

20. Outil combiné selon l'une quelconque des revendications précédentes, **caractérisé en ce que** le manche de guidage (5) est réalisé de manière réglable en hauteur, de préférence par réglage télescopique et/ou par un dispositif de pivotement pour l'ensemble ou pour une partie du manche de guidage (5).
